# EUROPÄISCHE PATENTSCHRIFT

(11) **EP 2 986 673 B1**
(45) Veröffentlichungstag und Bekanntmachung des Hinweises auf die Patenterteilung: **08.03.2017**
(21) Anmeldenummer: 14718936.9
(22) Anmeldetag: 07.04.2014
(51) Int. Cl.: C08L 77/06, C08L 77/00, C08K 3/02, C08K 5/5313, C08K 3/34, C08L 23/08

(54) **GLÜHDRAHTBESTÄNDIGE POLYAMIDE**
GLOW WIRE-RESISTANT POLYAMIDES
POLYAMIDE RÉSISTANT AU FILAMENT INCANDESCENT

(30) Priorität: 15.04.2013 EP 13163730
(43) Veröffentlichungstag der Anmeldung: 24.02.2016
(73) Patentinhaber: BASF SE, 67056 Ludwigshafen am Rhein (DE)
(72) Erfinder: ROTH, Michael, 64686 Lautertal (DE); USKE, Klaus, 67098 Bad Dürkheim (DE); MINGES, Christoph, 76835 Burrweiler (DE)
(74) Vertreter: BASF IP Association
(86) Internationale Anmeldenummer: PCT/EP2014/056890
(87) Internationale Veröffentlichungsnummer: WO 2014/170148

(56) Entgegenhaltungen:
- EP-A1- 1 024 167
- EP-A1- 1 741 754
- WO-A1-2005/121249
- SCHMITT ET AL: "Phosphorus-based flame retardants for thermoplastics", PLASTICS ADDITIVES AND COMPOUNDING, ELSEVIER SCIENCE, OXFORD, GB, Bd. 9, Nr. 3, 1. Mai 2007 (2007-05-01), Seiten 26-30, XP022095024, ISSN: 1464-391X, DOI: 10.1016/S1464-391X(07)70067-3

## Beschreibung

Die Erfindung betrifft die Verwendung von thermoplastischen Formmassen, enthaltend
A) 10 bis 97 Gew.-% eines thermoplastischen Polyamides
B) 1 bis 10 Gew.-% roter Phosphor,
C) 0,15 bis 6 Gew.-% eines Dialkylphosphinsäuresalzes, wobei das Verhältnis von B) zu C) 6 : 1 bis 6 : 4 beträgt,
D) 1 bis 10 Gew.-% eines Ethylencopolymerisates als Schlagzähmodifier, enthaltend als Komponente D) ein Copolymerisat aus
   D₁) 40 bis 98 Gew.-% Ethylen
   D₂) 2 bis 40 Gew.-% eines (Meth)Acrylates mit 1 bis 18 C-Atomen, oder/und
   D₃) 0 bis 20 Gew.-% funktioneller Monomerer, ausgewählt aus der Gruppe der ethylenisch ungesättigten Mono- oder Dicarbonsäuren
      oder der Carbonsäureanhydride oder Epoxidgruppen oder deren Mischungen,
      oder
      ein Ethylen-(Meth)acrylsäure Copolymer, welches bis zu 72 % mit Zink neutralisiert ist,
E) 0 bis 5 Gew.-% Talkum mit einer mittleren Teilchengröße (d₅₀-Wert) kleiner 7,5 µm,
F) 0 bis 60 Gew.-% weiterer Zusatzstoffe,
wobei die Summe der Gewichtsprozente der Komponenten A) bis F) 100 % ergibt, zur Herstellung von flammgeschützten, glühdrahtbeständigen Formkörpern.

Roter Phosphor ist als äußerst wirksames Flammschutzmittel speziell für glasfaserverstärkte Polyamide und eine Reihe weiterer Kunststoffe seit langer Zeit bekannt. Für eine Vielzahl von Anwendungen ist es jedoch notwendig, Kunststoff-Formmassen nicht nur eine hohe Flammwidrigkeit zu verleihen. Vielmehr erlangt gerade bei anspruchsvollen Anwendungen im Elektro- und Elektronikbereich die Abstimmung von Materialeigenschaften hin zu einem ausgewogenen Produktprofil, bestehend aus hohen Flammwidrigkeiten, bei gleichzeitig sehr guten mechanischen und elektrischen Kennwerten einen immer höheren Stellenwert.

Gerade bei dünnwandig ausgelegten Bauteilen, die. Z.B. mit stark beanspruchten Schnappverbindungen ausgestattet sind, kommt es darauf an, dass die eingesetzten Materialien, insbesondere über gute Dehnungswerte, aber auch über eine hohe Belastbarkeit bezüglich ihrer Zähigkeit verfügen.

Halogenfrei flammgeschützte, glasfaserverstärkte Polyamid-Compounds besitzen im Vergleich zu ähnlichen Zusammensetzungen ohne Flammschutz generell reduzierte mechanische Eigenschaften, speziell in Bezug auf Bruchdehnung und Schlagzähigkeit. Der Zusatz von Schlagzähmodifiern auf Basis von Olefin-(co)Polymeren führt jedoch in vielen Fällen zu stark reduzierten Flammschutzeigenschaften.

Die gemäß Stand der Technik (EP-A 174 17 54) vorgeschlagenen Verhältnisse von Phosphinat zu Phosphor ergeben bei Zusatz von Schlagzähmodifiern einen ungenügenden Flammschutz, insbesondere der Glühdrahttest analog DIN EN 60695-2-12 wird nicht mehr bestanden.

Der vorliegenden Erfindung lag daher die Aufgabe zugrunde, halogenfrei flammgeschützte Polyamide zur Verfügung zu stellen, die schlagzähmodifiziert sind und gleichzeitig einen guten Brandschutz, insbesondere Glühdrahtbeständigkeit, aufweisen. Demgemäß wurden die eingangs definierte Verwendung gefunden. Bevorzugte Ausführungsformen sind den Unteransprüchen zu entnehmen.

Als Komponente A) enthalten die erfindungsgemäß verwendbaren Formmassen 10 bis 97, vorzugsweise 20 bis 96 und insbesondere 30 bis 87 Gew.-% mindestens eines Polyamides.

Die Polyamide der erfindungsgemäßen Formmassen weisen im Allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methylpentan.

Bevorzugte Polyamide sind Polyhexamethylenadipinsäureamid, Polyhexamethylen-sebacinsäureamid und Polycaprolactam sowie Copolyamide 6/66, insbesondere mit einem Anteil von 5 bis 95 Gew.-% an Caprolactam-Einheiten (z.B. Ultramid^{®} C31 der BASF SE). Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/61/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

| AB-Polymere: | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

| AA/BB-Polymere | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | 1,9-nonanediamin, Terephthalsäure |
| PA MXD6 | m-Xylylendiamin, Adipinsäure |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Erfindungsgemäßes Flammschutzmittel B) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure (insbesondere Dioctylphthalat, s. EP 176 836) oder Adipinsäure oder mit polymeren oder oligomeren Verbindungen, z.B. mit Phenolharzen oder Aminoplasten sowie Polyurethanen beschichtet sind (s. EP-A 384 232, DE-A 196 48 503). Derartige sogenannte Phlegmatisierungsmittel sind in der Regel in Mengen von 0,05 bis 5 Gew.-%, bezogen auf 100 Gew.-% B) enthalten.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere.

Bevorzugte Konzentratzusammensetzungen sind:
B₁) 30 bis 90 Gew.-%, vorzugsweise von 45 bis 70 Gew.-% eines Polyamids A) oder Elastomeren D),
B₂) 10 bis 70 Gew.-%, vorzugsweise von 30 bis 55 Gew.-% roter Phosphor.

Das eingesetzte Polyamid für den Batch kann verschieden von A) sein oder bevorzugt gleich A) sein, damit Unverträglichkeiten oder Schmelzpunktdifferenzen keine negative Auswirkung auf die Formmasse aufweisen.

Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Der Gehalt der Komponente B) in den erfindungsgemäß verwendbaren Formmassen beträgt 1 bis 10, bevorzugt 3 bis 8 und insbesondere 4 bis 7 Gew.-%, bezogen auf die Summe der Komponenten A) bis F).
Wesentlich ist hierbei, dass das Verhältnis der Komponente B) zu C) 6 : 1 bis 6 : 4, vorzugsweise 6 : 1,5 bis 6 : 2,5 beträgt.

Als Komponente C) enthalten die erfindungsgemäß verwendbaren Formmassen 0,15 bis 6, vorzugsweise 0,5 bis 5 Gew.-% und insbesondere 1 bis 3 Gew.-% eines Dialkylphosphinsäuresalzes.

Bevorzugt ist die Komponente C) aufgebaut aus 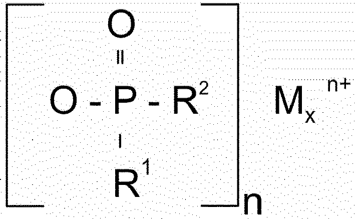
wobei R¹, R² unabhängig voneinander
   Methyl-, Ethyl, n-Propyl, iso-Propyl, n-Butyl, tert.-Butyl, n-Pentyl,
M = Mg, Ca, Al, Ti, Zn, Fe, Li, Na, K oder eine protonierte Stickstoffbase
x = 1 bis 4
n = 1 bis 4
bedeuten.

Besonders bevorzugt ist R¹, R², Methyl, Ethyl und M = Al oder Zn, wobei AI- oder Zndiethylphosphinat besonders bevorzugt sind.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder-sulfids als Trägermaterials (Weißpigmente, wie z.B. TiO₂, SnO₂, ZnO, ZnS, SiO₂) gefällt werden. Man erhält somit oberflächenmodifizierte Pigmente.

Wesentlich ist das bereits beschriebene Verhältnis B) : C), 6 : 1 bis 6 : 4, vorzugsweise 6 : 1,5 bis 6 : 2,5 beträgt.

Weiterhin beträgt bevorzugt das Verhältnis C : E (sofern Talkum vorhanden ist) 1 : 1 bis 2 : 0,002, vorzugsweise von 1 : 1 bis 1 : 0,05.

Als Komponente D) enthalten die erfindungsgemäß verwendbaren Formmassen 1 bis 10, vorzugsweise 4 bis 8 und insbesondere 5 bis 7 Gew.-% eines Schlagzähmodifiers auf Basis von Ethylencopolymeren, welche aufgebaut sind aus:
D₁) 40 bis 98 Gew.-%, bevorzugt 50 bis 94,5 Gew.-% Ethylen
D₂) 2 bis 40 Gew.-%, bevorzugt 5 bis 40 Gew.-% eines (Meth)Acrylates mit 1 bis 18 C-Atomen, oder/und
D₃) 0 bis 20 Gew.-%, bevorzugt 0,05 bis 10 Gew.-% funktioneller Monomerer, ausgewählt aus der Gruppe der ethylenisch ungesättigten Mono- oder Dicarbonsäuren oder der Carbonsäureanhydride oder Epoxidgruppen oder deren Mischungen, wobei die Summe der Gewichtsprozente D₁) bis D₃) 100 % ergibt. oder
ein Ethylen-(Meth)acrylsäure Copolymer, welches bis zu 72 % mit Zink neutralisiert ist.

Besonders bevorzugt sind Ethylencopolymere, aufgebaut aus:
D₁) 50 bis 69,9 Gew.-% Ethylen
D₂) 30 bis 40 Gew.-% eines (Meth)Acrylates mit 1 bis 18 C-Atomen
D₃) 0,1 bis 10 Gew.-% funktioneller Monomerer gemäß Anspruch 1,
wobei die Summe der Gewichtsprozente D₁) bis D₃) 100 % ergibt.

Der Anteil der funktionellen Gruppen D₃) beträgt 0,05 bis 5, vorzugsweise 0,2 bis 4 und insbesondere 0,3 bis 3,5 Gew.-%, bezogen auf 100 Gew.-% D).

Besonders bevorzugte Komponenten D₃) sind aus einer ethylenisch ungesättigten Mono- oder Dicarbonsäure oder einem funktionellen Derivat einer einer solchen Säure, vorzugsweise Glycidyl-(Meth)acrylat oder deren Mischungen aufgebaut.

Grundsätzlich eignen sich alle primären, sekundären und tertiären C₁-C₁₈-Alkylester der Acrylsäure oder Methacrylsäure D₂, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl, Octyl- und Decylacrylate bzw. die entsprechenden Ester der Methacrylsäure. Von diesen werden n-Butylacrylat und 2-Ethylhexylacrylat besonders bevorzugt.

Zusätzlich zu den Estern können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.
Als weitere Beispiele für Monomere D₃) seien Acrylsäure, Methacrylsäure, tertiäre Alkylester dieser Säuren, insbesondere tert.-Butylacrylat und Dicarbonsäuren wie Maleinsäure und Fumarsäure oder Anhydride dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Das Molekulargewicht dieser Ethylen-Copolymeren liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Bevorzugt eingesetzte Handelsprodukte sind Fusabond A 560, Lucalen A 2910, Lucalen A 3110, Nucrel 3990, Nucrel 925.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. Blackley in der Monographie "Emulsion Polymerization" beschrieben wird. Die verwendbaren Emulgatoren und Katalysatoren sind an sich bekannt.

Insbesondere bevorzugt sind Copolymerisate, welche keine Einheiten D₂) enthalten, jedoch die Säurekomponente D₃) mit Zn neutralisiert wurde. Hierbei sind Ethylen-(Meth)acrylsäure-Copolymere bevorzugt, welche bis zu 72 % mit Zink neutralisiert wurden (im Handel als Surlyn® 9520 der Firma Dupont erhältlich).

Als Komponente E) können die erfindungsgemäßen Formmassen 0 bis 5 Gew.-%, bevorzugt 0,0015 bis 5 Gew.-%, vorzugsweise 0,002 bis 1,5 Gew.-% und insbesondere 0,05 bis 1,0 Gew.-% Talkum enthalten, welches ein hydratisiertes Magnesiumsilikat der Zusammensetzung Mg₃[(OH)₂/Si₄O₁₀] oder 3 MgO . 4 SiO₂. H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Die Komponente E) weist eine mittlere Teilchengröße (d₅₀Wert) kleiner 7,5 µm, vorzugsweise kleiner 3 µm auf. Insbesondere wird Talkum eingesetzt, dessen Teilchengröße zu 100 % < 20 µm beträgt. Die Teilchengrößenverteilung wird üblicherweise durch Sedimentationsanalyse DIN 6616-1 bestimmt und beträgt vorzugsweise:

| | |
|---|---|
| < 20 µm | 100 Gew.-% |
| < 10 µm | 99 Gew.-% |
| < 5 µm | 85 Gew.-% |
| < 3 µm | 60 Gew.-% |
| < 2 µm | 43 Gew.-% |

Derartige Produkte sind im Handel als Micro-Talc I.T. extra (Fa. Norwegian Talc Minerals) erhältlich.

Bevorzugt weist die Komponente E) eine BET Oberfläche gemäß ISO 4652 von kleiner 13, vorzugsweise von 9 bis 12,5 m²/g auf.

Als Komponente F) können die erfindungsgemäßen Formmassen 0 bis 60, vorzugsweise bis zu 50 Gew.-% weiterer Zusatzstoffe enthalten.

Als faser- oder teilchenförmige Füllstoffe F) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 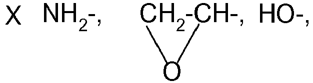
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Amincobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf F) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente F) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali, Zn und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente F) können die erfindungsgemäßen Formmassen sogenannte Säurefänger für den roten Phophor enthalten in Mengen von 0,01 bis 2, vorzugsweise von 0,3 bis 1,0 Gew.%. Geeignete Säurefänger sind ZnO, Zn-borat, Zn-stannat, MgO, Mg(OH)₂, ZnCO₃, MgCO₃, CaCO₃, Mg Ca Carbonate AIOOH, wobei ZnO, basisches ZnCO₃, Mg(OH)₂, CaCO₃, CuO/ZnO / Al₂O₃-Mischoxide besonders bevorzugt sind CaCO₃, ZnO.

Als sterisch gehinderte Phenole F) eignen sich prinzipiell alle Verbindungen mit phenolischer Struktur, die am phenolischen Ring mindestens eine sterisch anspruchsvolle Gruppe aufweisen. Vorzugsweise kommen z.B. Verbindungen der Formel 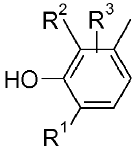 in Betracht, in der bedeuten:
R¹ und R² eine Alkylgruppe, eine substituierte Alkylgruppe oder eine substituierte Triazolgruppe,
wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 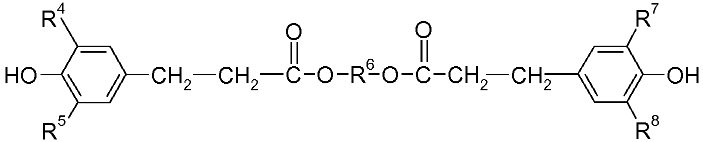 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

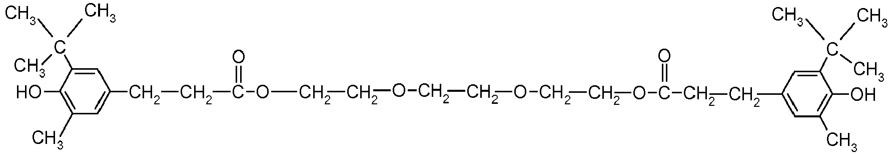

### (Irganox® 245 der Firma BASF SE)

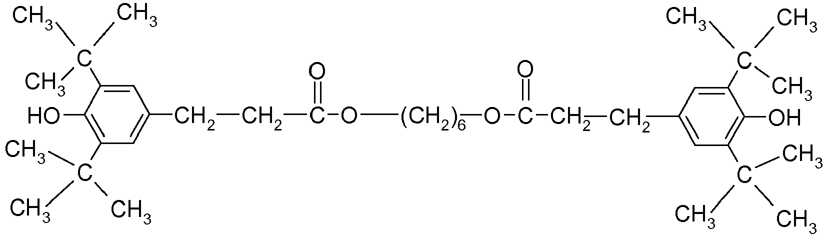

### (Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phospha-bicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.
Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydro-cinnamid (Irganox® 1098) und das vorstehend beschriebene Irganox® 245 der Firma BASF SE, das besonders gut geeignet ist.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Eine weitere Gruppe von bevorzugten Antioxidantien sind die sogenannten KupferStabilisatoren, in Mengen von 0,02 bis 1 Gew. %, vorzugsweise 0,05 bis 0,5 Gew.-%.

Diese Kupferstabilisatoren bestehen in der Regel aus zwei Komponenten, nämlich einem Gemisch von Kupferverbindungen und speziellen Halogensalzen. Die üblichen Kupferverbindungen sind die Kupfer(I)halogenide sowie Kupfersalze, wie Kupferacetat, Kupfersulfat oder Kupferstearat, und die Kupferkomplexe, beispielsweise Kupferacetylacetonat. Damit diese Verbindungen als Antioxidantien wirksam sind, müssen Halogenverbindungen in großem Überschuss zugegeben werden. Verwendet werden dabei insbesondere Kaliumiodid, aber auch Kaliumbromid. Die verwendete Menge ist dabei üblicherweise so gewählt, dass das Molverhältnis Kupfer: Halogen 1 : 5-15 beträgt. Die empfohlene Zugabemenge liegt in der Regel bei 30 bis 200 ppm Kupfer. Bevorzugt sind darüber hinaus Kupferkomplexe mit den Komplexliganden Triphenylphosphine, Mercaptobenzimidazole, Acetylacetonate und Glycin. Insbesondere bevorzugt sind Triphenylphosphine und Mercaptobenzimidazole.

Bevorzugte eingesetzte Komplexe des Kupfers werden üblicherweise durch Reaktion von Kupfer(I)ionen mit den Phosphin- bzw. Mercaptobenzimidazolverbindungen gebildet. Beispielsweise können diese Komplexe durch Umsetzung von Triphenylphosphin mit einem in Chloroform suspendierten Kupfer(I)halogenid erhalten werden (G. Kosta, E. Reisenhofer und L. Stafani, J. Inorg. Nukl. Chem. 27 (1965) 2581). Es ist aber auch möglich, Kupfer(II)verbindungen mit Triphenylphosphin reduktiv umzusetzen, um so die Kupfer(I)additionsverbindungen zu erhalten (F.U. Jardine, L. Rule, A.G. Vohrei, J. Chem. Soc. (A) 238-241 (1970)).

Beispiele geeigneter Komplexe lassen sich durch die folgenden Formeln darstellen:
[Cu(PPh₃)₃X], [Cu₂X₂(PPh₃)₃], [Cu(PPh₃)X]₄ sowie [Cu(PPh₃)₂)X], wobei X ausgewählt ist aus Cl, Br, I, CN, SCN oder 2-MBI.

Die Antioxidantien F), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis F) enthalten.

Als Komponente F) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente F) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente F) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, und Weichmacher enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B), D) und C) sowie gegebenenfalls F) und E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäß verwendbaren thermoplastischen Formmassen zeichnen sich durch eine gute Flammwidrigkeit und eine hervorragende Phosphorstabilität aus.

Daher eignen sich diese zur Herstellung von Formkörpern, welche den GWFI-Test (glow-wire-Flammability-Index) gemäß DIN EN 60 695-2-12 bei 960 °C bestehen.

Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informationstechnologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

### Es wurden folgende Komponenten eingesetzt:

### Komponente A:

Polyamid 66 mit einer Viskositätszahl VZ von 150 ml/g, gemessen als 0.5 gew.-%ige Lösung in 96 gew.-%iger Schwefelsäure bei 25°C nach ISO 307 (Es wurde Ultramid® A27 der BASF SE verwendet).

### Komponente B/1:

50%iges Konzentrat aus rotem Phosphor der mittleren Teilchengröße (d₅₀) von 10 bis 30 µm in Polyamid 6.

### Komponente B/2:

Roter Phosphor einer mittleren Teilchengröße (d₅₀) von 20 bis 25 µm.

### Komponente C/1:

Aluminium-Diethylphosphinat (Exolit^{®}OP1230 Clariant Produkte GmbH).

### Komponente C/2:

Zink-Diethylphosphinat (Exolit^{®} OP950 Clariant Produkte GmbH).

### Komponente C/3:

Calcium-hypophosphit (Sigma-Aldrich Co.) (Vergleich)

### Komponente C/4 (zum Vergleich)

Melaminpolyphosphat (Melapur®200/70 BASF SE)

### Komponente D/1:

Ein Olefinpolymerisat aus: 59,8 Gew.% Ethylen, 35 Gew.% n-Butylacrylat, 4,5 Gew.% Acrylsäure und 0,7 Gew.% Maleinsäureanhydrid mit einem Schmelzindex MFI (190/2.16) von 10 g/10min. Das Copolymerisat wurde durch Copolymerisation der Monomeren bei erhöhter Temperatur und erhöhtem Druck hergestellt.

### Komponente D/2:

Ethylen-1-Octen-Maleinsäureanhydrid Copolymer (Fusabond® 598D ex E.I. Du Pont de Nemours and Company) (Vergleich).

### Komponente E/1:

Talkum mit einer mittleren Teilchengröße D₅₀ von 2.3 µm und einer spezifischen BET Oberfläche (gemessen nach ISO 4652) von 9.5 m²/g (*Finntalc M05N* ex Mondo Minerals B.V.).

### Komponente E/2:

Talkum mit einer mittleren Teilchengröße D₅₀ von 1.7 µm und einer spezifischen BET Oberfläche (gemessen nach ISO 4652) von 12 m²/g (*Microtalc IT EXTRA* ex Mondo Minerals B.V.).

Komponente E/3: Talkum mit einer mittleren Teilchengröße D₅₀ von 7.4 µm und einer spezifischen BET Oberfläche (gemessen nach ISO 787/11) von 4.0 m²/g (*Tital 4591* ex Ankerpoort N.V.).

### Komponente F/1:

30%iges Konzentrat aus einem Gasruß mit einer spezifischen BET Oberfläche (gemessen nach DIN 66131) von 180 m²/g in Polyamid 6.

### Komponente F/2:

40%iges Konzentrat aus Nigrosin in Polyamid 6.

### Komponente F/3:

ZnO: Ca-Stearat: Irganox^{®} 1098 (2 : 1 : 1)

### Komponente F/4:

Standard Schnittglasfaser für Polyamide, Länge = 4.5mm, Durchmesser = 10 µm.

### Herstellung der Formmassen

Zum Nachweis der erfindungemäß beschriebenen Verbesserungen der Phosphorstäbilität wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 270°C bei flachem Temperaturprofil gemischt, als Strang ausgetragen, bis zur Granulierfähigkeit abgekühlt und granuliert.

### Messungen

Der Prüfkörper für die in Tabelle 1 aufgeführten Untersuchung wurden auf einer Spritzgießmaschine des Typs Arburg 420C bei einer Massetemperatur von ca. 270°C und einer Werkzeugtemperatur von ca. 80°C verspritzt.

Die Prüfkörper für die Spannungstests wurden nach ISO 527-2:/1993 und die Prüfkörper für die Schlagzähigkeitsmessungen nach ISO 179-2/1 eA hergestellt.

Die MVR Messungen wurden nach ISO 1133 durchgeführt.
Die Flammwidrigkeit der Formmassen wurde zum einen nach der Methode UL94-V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit GWFI (Glow-Wire-Flammability-Index) an Platten wurde nach DIN EN 60695-2-12 durchgeführt. Der GWFI ist eine generelle Eignungsprüfung für Kunststoffe im Kontakt mit spannungsführenden Teilen. Ermittelt wird die höchste Temperatur, in der in 3 aufeinander folgende Tests eine der folgenden Bedingungen erfüllt ist: (a) keine Entzündung der Probe oder (b) Nachbrennzeit oder Nachglühzeit ≤ 30 s nach Ende der Einwirkzeit des Glühdrahtes und keine Entzündung der Unterlage.

**Tabelle**

| Komponenten [Gew.-%] | V1 | V2 | V3 | V4 | V5 | V6 | | | | | |
|---|---|---|---|---|---|---|---|---|---|---|---|
| A | 46 | 54 | 41 | 46,1 | 51,5 | 46.6 | | | | | |
| B/1 | 6.6 | 6.6 | 6.6 | 6.6 | 6.6 | 12 | | | | | |
| B/2 | - | - | - | - | - | - | | | | | |
| F/4 | 26 | 26 | 26 | 26 | 26 | 26 | | | | | |
| C/1 | 10 | 2 | 10 | 6.6 | 3 | - | | | | | |
| C/2 | - | - | - | - | - | - | | | | | |
| C/3 | - | - | - | - | - | 4 | | | | | |
| C/4 | - | - | 5 | 3.3 | 1.5 | - | | | | | |
| D/1 | - | - | - | - | - | 10 | | | | | |
| D/2 | 10 | 10 | 10 | 10 | 10 | - | | | | | |
| E/1 | - | - | - | - | - | - | | | | | |
| E/2 | - | - | - | - | - | - | | | | | |
| E/3 | - | - | - | - | - | - | | | | | |
| F/1 | - | - | - | - | - | - | | | | | |
| F/2 | - | - | - | - | - | - | | | | | |
| F/3 | 1.4 | 1.4 | 1.4 | 1.4 | 1.4 | 1.4 | | | | | |
| E-Modul /[MPa] | 7089 | 7267 | 7097 | 7058 | 7047 | NICHT EX-TRU-DIER-BAR | | | | | |
| Bruchspannung / [MPa] | 93 | 108 | 99 | 97 | 107 | | | | | | |
| Bruchdehnung /[%] | 4.3 | 3.9 | 3.8 | 3.5 | 3.3 | | | | | | |
| Charpy Schlagzähigkeit / [kJ/m²] | 68 | 70 | 61 | 66 | 68 | | | | | | |
| MVR 275°C/5kg / [cm³/10 min] | 20 | 32 | 8 | 14 | 20 | | | | | | |
| UL94 (1.6mm) | n.c. | n.c. | V-0 | V-0 | V.0 | - | | | | | |
| UL94 (0.8mm) | V-1 | n.c. | V-0 | V-1 | n.c. | - | | | | | |
| Verhältnis Prot : C/1 | 6 : 18 | 6 : 3.6 | 6 : 18 | 6 : 12 | 6 : 5.5 | - | | | | | |
| GWFI960 (1.5mm) | Nicht erfüllt | Nicht erfüllt | erfüllt | erfüllt | erfüllt | - | | | | | |

| Komponenten [Gew.-%] | 1 | 2 | 3 | 4 | 5 | 6 | 7 | 8 | 9 | 10 | 11 |
|---|---|---|---|---|---|---|---|---|---|---|---|
| A | 46.6 | 46.6 | 46.6 | 58.6 | 48.6 | 48.55 | 50.6 | 47.27 | 53.27 | 50.6 | 50.6 |
| B/1 | 12 | 12 | 12 | - | 12 | 12 | 12 | 12 | 12 | 12 | 12 |
| B/2 | - | - | - | 6 | - | - | - | - | - | - | - |
| F/4 | 26 | 26 | 26 | 26 | 26 | 26 | 26 | 26 | 26 | 26 | 26 |
| C/1 | - | 4 | 2 | 2 | 2 | 2 | 2 | 2 | 1 | 2 | 2 |
| C/2 | 4 | - | - | - | - | - | - | - | - | - | - |
| C/3 | - | - | - | - | - | - | - | - | - | - | - |
| D/1 | 10 | 10 | 10 | 6 | 10 | 10 | 6 | 6 | - | 6 | 6 |
| E/1 | - | - | 2 | - | 0.002 | 0.05 | 2 | 2 | 1 | - | - |
| E/2 | - | - | - | - | - | - | - | - | - | 2 | - |
| E/3 | - | - | - | - | - | - | - | - | - | - | 2 |
| F/1 | - | - | - | - | - | - | - | 3.33 | 3.33 | - | - |
| F/2 | - | - | - | - | - | - | - | - | 2.0 | - | - |
| F/3 | 1.4 | 1.4 | 1.4 | 1.4 | 1.4 | 1.4 | 1.4 | 1.4 | 1.4 | 1.4 | 1.4 |
| E-Modul /[MPa] | 8337 | 7393 | 7871 | 8137 | 7299 | 7239 | 8563 | 8377 | 8377 | 8344 | 8302 |
| Bruchspannung /[MPa] | 121 | 112 | 118 | 138 | 118 | 121 | 132 | 128 | 132 | 129 | 129 |
| Bruchdehnung /[%] | 3.6 | 4.7 | 4.1 | 3.8 | 3.5 | 3.7 | 3.2 | 3.4 | 3.0 | 3.3 | 3.4 |
| Charpy Schlagzähigkeit / [kJ/m²] | 84 | 75 | 77 | 71 | 72 | 71 | 69 | 72 | 66 | 70 | 68 |
| MVR 275°C/5kg / [cm³/10 min] | - | 13 | 12 | 40 | - | - | 29 | 21 | 24 | 28 | 26 |
| UL94 (1.6mm) | V-0 | V-0 | V-0 | V-0 | V-0- | V-0 | V-0 | V-0 | V-0 | V-0 | V-0 |
| UL94 (0.8mm) | - | V-0 | V-0 | V-0 | - | - | V-0 | V-0 | V-0 | V-0 | V-0 |
| Verhältnis Prot:C/1 Resp. C/2 | 6 : 4 | 6 :4 | 6 : 2 | 6 : 2 | 6 : 2 | 6 : 2 | 6 : 2 | 6 : 2 | 6 : 1 | 6 : 2 | 6 : 2 |
| GWFI960 (1.5mm) | erfüllt | erfüllt | erfüllt | erfüllt | erfüllt | erfüllt | erfüllt | erfüllt | erfüllt | erfüllt | erfüllt |

## Patentansprüche

1. Verwendung von thermoplastischen Formmassen, enthaltend
A) 10 bis 97 Gew.-% eines thermoplastischen Polyamides,
B) 1 bis 10 Gew.-% roter Phosphor,
C) 0,15 bis 6 Gew.-% eines Dialkylphosphinsäuresalzes, wobei das Verhältnis von B) zu C) 6 : 1 bis 6 : 4 beträgt,
D) 1 bis 10 Gew.-% eines Ethylencopolymerisates als Schlagzähmodifier, enthaltend als Komponente D) ein Copolymerisat aus
D₁) 40 bis 98 Gew.-% Ethylen
D₂) 2 bis 40 Gew.-% eines (Meth)Acrylates mit 1 bis 18 C-Atomen, oder/und
D₃) 0 bis 20 Gew.-% funktioneller Monomerer, ausgewählt aus der Gruppe der ethylenisch ungesättigten Mono- oder Dicarbonsäuren
oder der Carbonsäureanhydride oder Epoxidgruppen oder deren Mischungen, oder
ein Ethylen-(Meth)acrylsäure Copolymer, welches bis zu 72 % mit Zink neutralisiert ist,
E) 0 bis 5 Gew.-% Talkum mit einer mittleren Teilchengröße (d₅₀-Wert) kleiner 7,5 µm,
F) 0 bis 60 Gew.-% weiterer Zusatzstoffe,
wobei die Summe der Gewichtsprozente der Komponenten A) bis F) 100 % ergibt,
zur Herstellung von flammgeschützten, glühdrahtbeständigen Formkörpern.

2. Verwendung nach Anspruch 1, wobei die Formmassen enthalten
| | | | |
|---|---|---|---|
| A) | 10 | bis | 97 Gew.-% |
| B) | 1 | bis | 10 Gew.-% |
| C) | 0,15 | bis | 6 Gew.-% |
| D) | 1 | bis | 10 Gew.-% |
| E) | 0,0015 | bis | 5 Gew.-% |
| F) | 0 | bis | 60 Gew.-% |

3. Verwendung nach den Ansprüchen 1 oder 2, wobei die Komponente C) aufgebaut ist aus 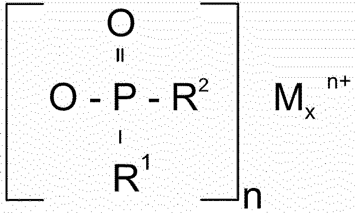
wobei R¹, R² unabhängig voneinander
Methyl-, Ethyl, n-Propyl, iso-Propyl, n-Butyl, tert.-Butyl, n-Pentyl,
M = Mg, Ca, Al, Ti, Zn, Fe, Li, Na, K oder eine protonierte Stickstoffbase
x = 1 bis 4
n = 1 bis 4
bedeuten.

4. Verwendung nach den Ansprüchen 1 bis 3, wobei die Komponente C) aus Zink- und/oder Al-diethylphosphinat aufgebaut ist.

5. Verwendung nach den Ansprüchen 1 bis 4, wobei das Verhältnis C) zu E) 1 : 1 bis 2 : 0,002 beträgt.

6. Verwendung nach den Ansprüchen 1 bis 5, enthaltend als Komponente D ein Copolymerisat aus
D₁) 50 bis 69,9 Gew.-% Ethylen
D₂) 30 bis 40 Gew.-% eines (Meth)Acrylates mit 1 bis 18 C-Atomen
D₃) 0,1 bis 10 Gew.-% funktioneller Monomerer gemäß Anspruch 1,
wobei die Summe der Gewichtsprozente D₁) bis D₃) 100 % ergibt.

7. Verwendung nach den Ansprüchen 1 bis 6, in denen die Komponente D₃) aus Acrylsäure, Maleinsäureanhydrid, Glycidyl-(Meth)acrylat oder deren Mischungen aufgebaut ist.

8. Verwendung nach den Ansprüchen 1 bis 7, in denen die BET-Oberfläche gemäß ISO 4652 der Komponente E) kleiner 13 m²/g beträgt.

9. Formkörper, erhältlich gemäß der Verwendung gemäß den Ansprüchen 1 bis 7, welche den GWFI-Test (glow-wire-Flammability-Index) gemäß DIN EN 60 695-2-12 bei 960 °C bestehen.

## Claims

1. The use of thermoplastic molding compositions comprising
A) from 10 to 97% by weight of a thermoplastic polyamide,
B) from 1 to 10% by weight of red phosphorus,
C) from 0.15 to 6% by weight of a dialkylphosphinic salt, where the ratio of B) to C) is from 6 : 1 to 6 : 4,
D) from 1 to 10% by weight of an ethylene copolymer as impact modifier, comprising as component D) a copolymer of
D₁) from 40 to 98% by weight of ethylene
D₂) from 2 to 40% by weight of a (meth)acrylate having from 1 to 18 carbon atoms, or/and
D₃) from 0 to 20% by weight of functional monomers selected from the group of the ethylenically unsaturated mono- or dicarboxylic acids or of the carboxylic anhydrides or epoxide groups, or a mixture of these,
or
an ethylene-(meth)acrylic acid copolymer neutralized with zinc up to an extent of 72%,
E) from 0 to 5% by weight of talc powder with a median particle size (d₅₀
value) below 7.5 µm,
F) from 0 to 60% by weight of further additional substances,
where the sum of the percentages by weight of components A) to F) is 100%,
for the production of flame-retardant, glow-wire-resistant moldings.

2. The use according to claim 1, where the molding compositions comprise
| | | | | |
|---|---|---|---|---|
| A) | from | 10 | to | 97% by weight |
| B) | from | 1 | to | 10% by weight |
| C) | from | 0.15 | to | 6% by weight |
| D) | from | 1 | to | 10% by weight |
| E) | from | 0.0015 | to | 5% by weight |
| F) | from | 0 | to | 60% by weight. |

3. The use according to claim 1 or 2, where component C) is composed of 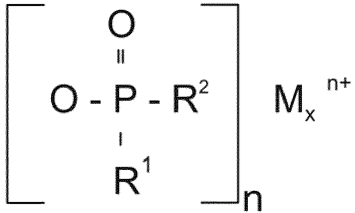
where R¹ and R² are mutually independently methyl, ethyl, n-propyl, isopropyl, n-butyl, tert-butyl, n-pentyl,
M = Mg, Ca, Al, Ti, Zn, Fe, Li, Na, K, or a protonated nitrogen base
x = from 1 to 4
n = from 1 to 4.

4. The use according to claims 1 to 3, where component C) is composed of zinc diethylphosphinate and/or Al diethylphosphinate

5. The use according to claims 1 to 4, where the ratio of C) to E) is from 1 : 1 to 2 : 0.002.

6. The use according to claims 1 to 5, comprising as component D a copolymer of
D₁) from 50 to 69.9% by weight of ethylene
D₂) from 30 to 40% by weight of a (meth) acrylate having from 1 to 18 carbon atoms
D₃) from 0.1 to 10% by weight of functional monomers according to claim 1,
where the sum of the percentages by weight D₁) to D₃) is 100%.

7. The use according to claims 1 to 6, in which component D₃) is composed of acrylic acid, maleic anhydride, glycidyl (meth)acrylate, or a mixture thereof.

8. The use according to claims 1 to 7, in which the BET surface area in accordance with ISO 4652 of component E) is less than 13 m²/g.

9. A molding obtainable according to the use according to claims 1 to 7, which passes the GWFI (glow-wire flammability index) test in accordance with DIN EN 60 695-2-12 at 960°C.

## Revendications

1. Utilisation de masses de moulage thermoplastiques, contenant
A) 10 à 97% en poids d'un polyamide thermoplastique,
B) 1 à 10% en poids de phosphore rouge,
C) 0,15 à 6% en poids d'un sel de l'acide dialkylphosphinique, le rapport de B) à C) valant 6:1 à 6:4,
D) 1 à 10% en poids d'un copolymère d'éthylène comme agent de modification de la résilience contenant, comme composant D), un copolymère de
D₁) 40 à 98% en poids d'éthylène,
D₂) 2 à 40% en poids d'un (méth) acrylate comprenant 1 à 18 atomes de carbone et/ou
D₃) 0 à 20% en poids de monomères fonctionnels, choisis dans le groupe des acides monocarboxyliques ou dicarboxyliques éthyléniquement insaturés ou des anhydrides d'acide carboxylique ou des groupes époxydes ou leurs mélanges, ou un copolymère d'éthylène-acide (méth)acrylique, qui est neutralisé jusqu'à 72% par du zinc,
E) 0 à 5% en poids de talc présentant une grosseur moyenne de particule (valeur d₅₀) inférieure à 7,5 µm,
F) 0 à 60% en poids d'autres additifs,
la somme des pourcentages en poids des composants A) à F) valant 100%, pour la fabrication de corps façonnés ignifugés, résistants aux fils incandescents.

2. Utilisation selon la revendication 1, les masses de moulage contenant
A) 10 à 97% en poids
B) 1 à 10% en poids
C) 0,15 à 6% en poids
D) 1 à 10% en poids
E) 0,0015 à 5% en poids
F) 0 à 60% en poids

3. Utilisation selon les revendications 1 ou 2, le composant C) étant constitué par 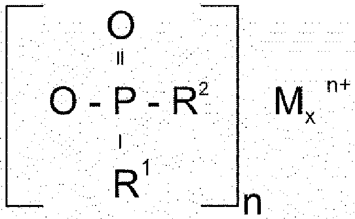 où
R¹, R² représentent, indépendamment l'un de l'autre, méthyle, éthyle, n-propyle, iso-propyle, n-butyle, tert-butyle, n-pentyle,
M = Mg, Ca, Al, Ti, Zn, Fe, Li, Na, K ou une base azotée protonée
x = 1 à 4
n = 1 à 4.

4. Utilisation selon les revendications 1 à 3, le composant C) étant constitué par du diéthylphosphinate de zinc et/ou d'Al.

5. Utilisation selon les revendications 1 à 4, le rapport C):E) valant 1:1 à 2:0,002.

6. Utilisation selon les revendications 1 à 5, contenant, comme composant D, un copolymère de
D₁) 50 à 69,9% en poids d'éthylène,
D₂) 30 à 40% en poids d'un (méth)acrylate comprenant 1 à 18 atomes de carbone
D₃) 0,1 à 10% en poids de monomères fonctionnels selon la revendication 1
la somme des pourcentages en poids de D₁) à D₃) valant 100%.

7. Utilisation selon les revendications 1 à 6, dans laquelle le composant D₃) est constitué par de l'acide acrylique, de l'anhydride de l'acide maléique, du (méth)acrylate de glycidyle ou leurs mélanges.

8. Utilisation selon les revendications 1 à 7, dans laquelle la surface BET selon la norme ISO 4652 du composant E) est inférieure à 13 m²/g.

9. Corps façonnés, pouvant être obtenus selon l'utilisation selon les revendications 1 à 7, qui résistent à l'essai GWFI (glow-wire-Flammability-Index
- indice d'inflammabilité par un fil incandescent) selon la norme DIN EN 60 695-2-12 à 960°C.
